# EUROPEAN PATENT APPLICATION

(11) **EP 4 379 533 A1**
(43) Date of publication of application: **05.06.2024**
(21) Application number: 23202508.0
(22) Date of filing: 09.10.2023
(51) Int. Cl.: G06F 3/16, H04M 3/56

(54) **NETWORKS AND BRIDGING DEVICES FOR FACILITATING AUDIO COMMUNICATION**

(30) Priority: 01.12.2022 US 202218060771
(71) Applicant: Nokia Solutions and Networks Oy, 02610 Espoo (FI)
(72) Inventor: Aiken, Dale, Ottawa, K2W 1A7 (CA); Groff, Wayne, Ottawa, K2K 3N2 (CA); Poulin, Andre, Gatineau, J9J 1H7 (CA); Wong, Kin Yee, Ottawa, K2J 5L8 (CA)
(74) Representative: Bryers Intellectual Property Ltd

(57) **Abstract**

A bridging device may facilitate audio communication between a plurality of devices. The bridging device includes processing circuitry configured to cause the bridging device to selectively apply unidirectional mute of at least audio on at least one of a plurality of interfaces. Each of the plurality of interfaces may correspond to a device among the plurality of devices.

## Description

### BACKGROUND

Bridging devices are used to facilitate audio communications between devices. For many bridging devices, the audio output is generated by aggregating the audio input from all of the connected devices and outputting the aggregate audio to each of the connected devices. Generally, both the transmit and the receive are carried in a single timeslot making it difficult to separate transmit from receive in the network core. In these bridging devices, muting audio output to one of the connected devices requires physically disconnecting the wire or cable connected to the device.

### SUMMARY

The scope of protection sought for various example embodiments of the disclosure is set out by the independent claims. The example embodiments and/or features, if any, described in this specification that do not fall under the scope of the independent claims are to be interpreted as examples useful for understanding various embodiments.

One or more example embodiments may improve functionality of networks and/or bridging devices.

One or more example embodiments provide bridging devices that may facilitate audio communication between devices and/or allow for unidirectional mute of audio output for at least one of the devices.

One or more example embodiments provide a bridging device facilitating audio communication between a plurality of devices. The bridging device includes processing circuitry configured to cause the bridging device to selectively apply unidirectional mute of at least audio on at least one of a plurality of interfaces. Each of the plurality of interfaces correspond to a device among the plurality of devices.

One or more example embodiments provide a bridging device facilitating audio communication between a plurality of devices. The bridging device includes means for causing selectively applying unidirectional mute of at least audio on at least one of a plurality of interfaces. Each of the plurality of interfaces correspond to a device among the plurality of devices.

The processing circuitry may be configured to cause the bridging device to transmit signaling between the plurality of devices independent of whether unidirectional mute is applied to the at least one of the plurality of interfaces.

The processing circuitry may be further configured to cause the bridging device to: receive a mute output command for a first device among the plurality of devices, the first device having a corresponding first interface among the plurality of interfaces; and apply unidirectional mute of at least the audio on the first interface based on the mute output command for the first device.

The processing circuitry may be further configured to apply unidirectional mute of at least the audio on the first interface based on the mute output command for the first device by: generating first audio output based on received audio input from at least one of the plurality of devices; generating second audio output based on the mute output command; outputting the second audio output via the first interface; and outputting the first audio output via others of the plurality of interfaces.

The processing circuitry may include a voice conference bridge configured to generate the first audio output based on the received audio input.

The processing circuitry may be further configured to cause the bridging device to: packetize the second audio output for output to the first interface; packetize the first audio output for output to the others of the plurality of interfaces; output the packetized second audio output via the first interface; and output the packetized first audio output to the others of the plurality of interfaces.

The mute output command for the first device may be a command to output mute audio output to the first interface, and the second audio output may be a muted signal.

The second audio output may include substantially no audio information.

The first audio output and the second audio output may be formatted for an analog telephone.

The bridging device may further include: a first communication interface configured to communicate directly with analog audio devices; a second communication interface configured to communicate with ethernet devices; and/or a third communication interface configured to communicate with a controller.

The mute output command for the first device may be received from a controller separate from the bridging device and the plurality of devices.

The processing circuitry may be configured to selectively apply the unidirectional mute by selectively propagating audio input received at the bridging device to another of the plurality of interfaces and not to the at least one of the plurality of interfaces.

One or more example embodiments provide a method for operating a bridging device. The method includes selectively applying, by the bridging device, unidirectional mute of at least audio on at least one of a plurality of interfaces, each of the plurality of interfaces corresponding to a device among a plurality of devices.

One or more example embodiments provide a non-transitory computer readable storage medium storing computer-executable instructions that, when executed by one or more processors of a bridging device, cause the bridging device to perform a method comprising: selectively applying, by the bridging device, unidirectional mute of at least audio on at least one of a plurality of interfaces, each of the plurality of interfaces corresponding to a device among a plurality of devices.

The method may further include transmitting signaling between the plurality of devices independent of whether unidirectional mute is applied to the at least one of the plurality of interfaces.

The method may further include receiving a mute output command for a first device among the plurality of devices, the first device having a corresponding first interface among the plurality of interfaces; and applying the unidirectional mute of at least the audio on the first interface based on the mute output command for the first device.

The applying unidirectional mute of at least the audio on the first interface based on the mute output command for the first device may include: generating first audio output based on received audio input from at least one of the plurality of devices; generating second audio output based on the mute output command; outputting the second audio output via the first interface; and outputting the first audio output via others of the plurality of interfaces.

The bridging device may include a voice conference bridge which generates the first audio output based on the received audio input.

The method may further include packetizing the second audio output for output to the first interface; packetizing the first audio output for output to the others of the plurality of interfaces; outputting the packetized second audio output via the first interface; and outputting the packetized first audio output to the others of the plurality of interfaces.

The mute output command for the first device may be a command to output mute audio output to the first interface, and the second audio output may be a muted signal.

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of this disclosure.
FIG. 1 is a block diagram illustrating a system according to some example embodiments;
FIG. 2 is a block diagram illustrating a bridging device according to some example embodiments;
FIG. 3 is a flow chart illustrating a method according to some example embodiments;
FIG. 4 is a flow chart illustrating another method according to some example embodiments; and
FIG. 5 is a block diagram illustrating a controller according to some example embodiments.

It should be noted that these figures are intended to illustrate the general characteristics of methods, structure, and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown. While example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Bridging devices are used to facilitate multimedia (e.g., audio and/or video) communications between devices. In one example, bridging devices may be used to facilitate audio communication between devices such as telephone receivers, which are not capable of sending sophisticated control signals or even providing sophisticated control for the device itself.

One or more example embodiments provide a controller, which is connected to a central bridging device, and configured to selectively and/or unidirectionally mute audio to and/or from one or more connected devices, for example, when it is desirable to have a device's sound output muted, but retain the audio connection and maintain audio input to a bridging device.

According to one or more example embodiments, a bridging device may include processing circuitry to cause the bridging device to selectively apply unidirectional mute of at least audio on at least one of a plurality of interfaces, wherein each of the plurality of interfaces corresponds to a device among a plurality of devices. The processing circuitry causes the bridging device to transmit signaling between the plurality of devices independent of whether unidirectional mute is applied to the at least one of the plurality of interfaces. For example, even if unidirectional mute is applied with regard to one of the plurality of interfaces, the bridging device continues to receive audio information from the interface and transmit audio information to the interface.

According to at least one example embodiment, based on a mute command from a controller, the bridging device outputs first audio output to unmuted interfaces and second audio output to muted interfaces thereby selectively applying unidirectional mute among the interfaces. The first audio output includes substantial audio information and the second audio output includes no substantial audio information. In one example, substantially no audio output means no audio output which a human listener would understand to convey audio information. In another example, substantially no audio output may refer to silence, white noise or another replacement signal (e.g., music or other audio signal).

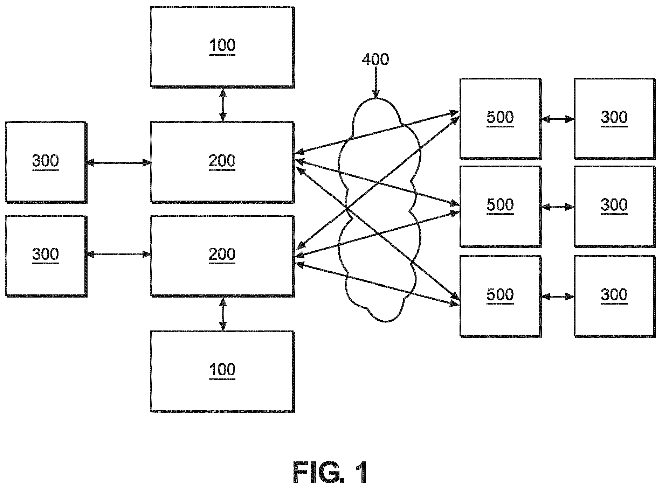

FIG. 1 is a block diagram illustrating a system according to some example embodiments. The system includes controllers 100, central bridging devices 200, user consoles 300, network 400, and remote bridging devices 500.

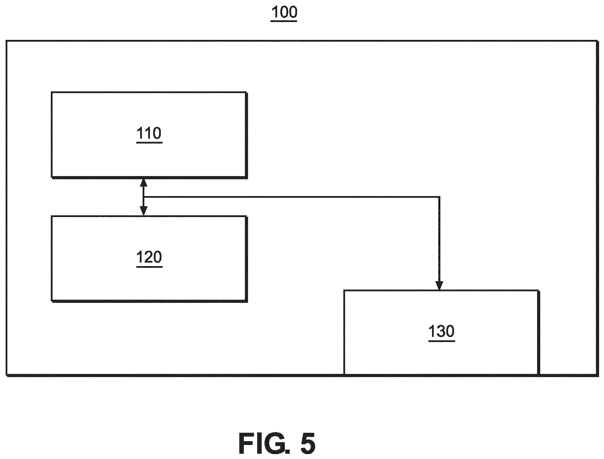

In the example shown in FIG. 1, each controller 100 is connected to one of the central bridging devices 200 such that electrical communication may pass between the controller 100 and the central bridging device 200. As discussed later with regard to FIG. 5, the controller 100 includes processing circuitry, one or more memories, and communication hardware (not shown) that allow the controller 100 to execute computer readable instructions to send control signals to the central bridging device 200. The controller 100 is programmed to generate and send the control signals based on input, such as user input. For example, the controller 100 may be a console separate from the bridging devices 200 and user consoles 300 where a user may enter commands through a user interface. Based on the commands, the controller 100 sends control signals to the central bridging device 200 to cause the central bridging device 200 to perform an action. In one example, the controller 100 may be a cellular phone configured to wirelessly communicate with the central bridging device 200, a computer configured to communicate with the central bridging device 200 over a wired and/or wireless connection, or a server configured to communicate with the central bridging device 200 over one or more networks (e.g., local area networks (LANs), wide area networks (WANs), etc.). In other example embodiments, the controller 100 may be integrated into the central bridging device 200.

The central bridging devices 200 are also connected via a network 400 to one or more remote bridging devices 500. The network 400 may be an ethernet network or another form of wired or wireless network. The network 400 may include various nodes (not shown), which relay signals sent between the central bridging devices 200 and the remote bridging devices 500. The remote bridging devices 500 may also be further connected to other bridging devices. Thus, a signal may be passed through any number of bridging devices. The bridging devices 200 and/or 500 may support network protocols such as IP routing, IPv6, multicast functionality, resource reservation protocol - traffic engineering, etc.

The central bridging device 200 is also connected to one or more user consoles 300. The user consoles 300 may be connected to the central bridging devices 200 via Ear and Mouth (E&M) hardware and may communicate via E&M protocols. In one example, the user consoles 300 may be Very High Frequency (VHF) consoles with antennas or other hardware for communicating E&M signals to analog audio devices such as telephones or other receivers. The receivers may be part of the user consoles 300 or may be connected to the user consoles 300 via, for example, a wired or wireless communications protocol (e.g., Bluetooth or other short range wireless communications protocol). A receiver may be a telephone, a headset, microphone and speaker, or other form of hardware, which can communicate E&M information with a user. Each of the remote bridging devices 500 may also be connected to one or more user consoles 300.

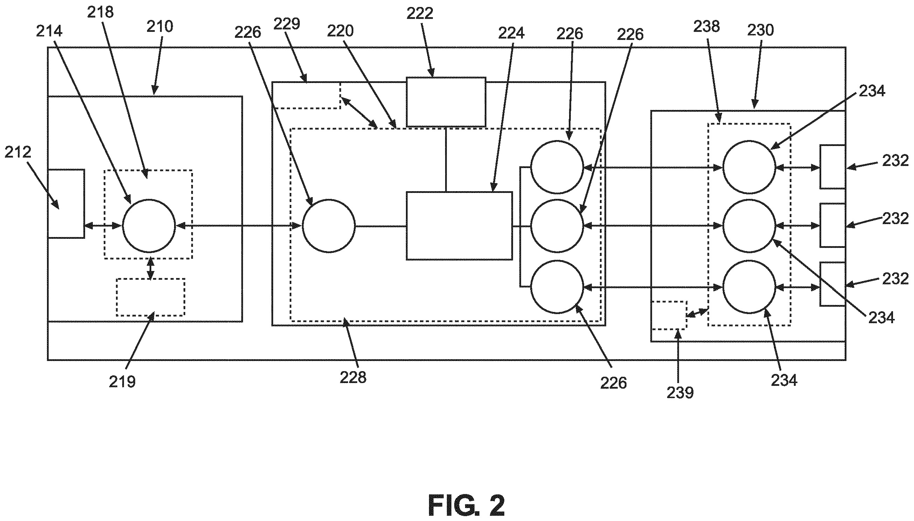

FIG. 2 is a block diagram illustrating a central bridging device 200 according to some example embodiments. In one example, the central bridging device 200 may be a service aggregation router. However, example embodiments should not be limited to this example. A remote bridging device 500 may have the same structure and components as the central bridging device 200, and thus, a detailed description thereof is omitted.

Referring to FIG. 2, the central bridging device 200 may include an E&M interface card 210, an Integrated Services Card (ISC) 220, and a network interface card 230 (e.g., an ethernet interface card). The E&M interface card 210 may be a Media-Dependent Adapter (MDA). The network interface card 230 may also be an MDA. The E&M interface card 210 and the network interface card 230 are communicatively connected to the ISC 220. The ISC 220 provides data packets to the E&M interface card 210 and the network interface card 230 and receives data packets from the E&M interface card 210 and the network interface card 230. The E&M interface card 210 may communicate with the user console 300 via an E&M port 212. The network interface card 230 communicates with other bridging devices through the network 400 via network ports 232 (e.g., ethernet ports). The ISC 220 may communicate with the controller 100 via a controller interface 222. In one example, the controller interface 222 may be a port for a wired connection to connect the controller 100 to the ISC 220 via a wired connection. In another example, the controller interface 222 may be a wireless interface such wireless LAN interface to connect the controller 100 to the ISC 220 wirelessly. As noted above, in some example embodiments, the controller 100 may be incorporated into the central bridging device 200.

The E&M interface card 210 includes a service access point (SAP) 214. The SAP 214 receives data packets from the ISC 220 and prepares and sends the data packets to the user console 300 via the E&M port 212. The SAP 214 also receives packets or other E&M information via the E&M port 212 and transmits the packets or other E&M information to the ISC 220. The SAP 214 may be implemented via processing circuitry 218 such as one or more processors, Field Programmable Gate Array (FPGA), or the like to execute the operations of the SAP 214, such as analog to digital conversion for audio input and digital to analog conversion for audio output. The E&M interface card 210 may further include a memory 219 to store instructions for operating the E&M interface card 210. The instructions may be read and executed by the processing circuitry 218.

The network interface card 230 includes service destination points (SDPs) 234. In one example, the network interface card 230 may include a SDP 234 corresponding to each network port 232. Each SDP 234 receives data packets from the ISC 220 and prepares and sends the packets to the remote bridging devices 500 via the network 400. Each SDP 234 also receives data packets or other information from the remote bridging devices 500 via the network 400 and transmits the packets or other information to the ISC 220. Each SDP 234 may be implemented via processing circuitry 238 such as one or more processors, FPGAs, or the like, to execute the operations of the SDP 234. Each SDP 234 also facilitates connection and communication over the network 400. The network interface card 230 may include a memory 239 to store instructions for operating the network interface card 230. The instructions may be read and executed by the processing circuitry 238.

The ISC 220 may include processing circuitry 228, which implements virtual SAPs (V-SAPs) 226 and a Voice Conference Bridge (VCB) 224. The processing circuitry 228 may include, for example, one or more processors, a single processor (e.g., with one or more cores), or some other combination of elements implemented on processors or other processing circuitry, such as FPGAs, ASICs, etc. In one example, a V-SAP 226 may be implemented for each respective SAP 214 and SDP 234. The V-SAP 226 communicates with the SAP 214 and SDP 234 via respective channels to facilitate communication between with the VCB 224 and the SAP 214 or SDP 234. The ISC 220 also includes a memory 229 storing instructions for operating the ISC 220. The instructions may be read and executed by the processing circuitry 228.

As will be described in more detail below, the VCB 224 may facilitate audio communication between a plurality of devices by selectively applying unidirectional mute of at least audio on at least one of a plurality of interfaces, each of the plurality of interfaces corresponding to a device among the plurality of devices. Processing circuitry (such as processing circuitry 218, processing circuitry 228, and/or processing circuitry 238) may cause the bridging device to selectively apply unidirectional mute of at least audio on at least one of a plurality of interfaces, each of the plurality of interfaces corresponding to a device among the plurality of devices. The processing circuitry causes the bridging device 200 to transmit signaling between the plurality of devices independent of whether unidirectional mute is applied to the at least one of the plurality of interfaces (e.g., E&M ports 212 and network ports 232). For example, even if a unidirectional mute is applied to one of the plurality of interfaces the bridging device continues to receive audio information from the interface and transmit to the interface. Based on a mute command from a controller 100, the bridging device outputs first audio output to unmuted interfaces and second audio to muted interfaces based on the mute command, wherein the first audio output includes substantial audio information and the second audio output includes no substantial audio information.

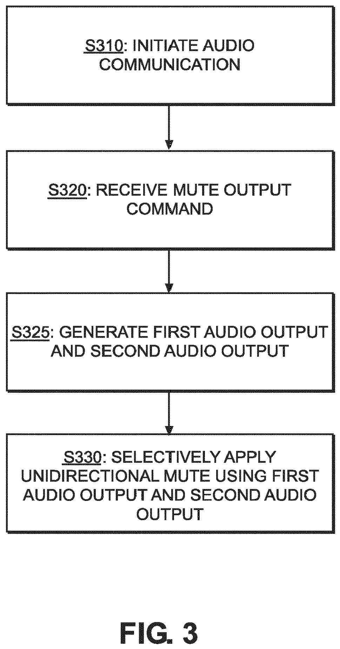

FIG. 3 is a flow chart illustrating a method for controlling audio output to user consoles according to some example embodiments. For example purposes, the method shown in FIG. 3 will be discussed with regard to the example embodiments shown in FIGS. 1 and 2. However, example embodiments should not be limited to this example.

Referring to FIG. 3, at S310, the central bridging device 200 initiates audio communication with a plurality of user consoles 300. In some example embodiments, the audio communication with the user consoles 300 may be through direct communication with the user consoles 300 (e.g., communication via the E&M interface card 210), which are connected directly to the central bridging device 200. Initiating audio communication may include connecting a user console 300 to the central bridging device 200, connecting remote bridging devices 500 (with associated user consoles 300) to the central bridging device 200 and/or receiving audio information from the user consoles 300. Connecting the central bridging device 200 to the remote bridging devices 500 via the network 400 may include establishing communication with the remote bridging devices 500 via the network 400 using a handshake protocol or other related process.

Once initiated, audio communication between user consoles 300 may be performed in real time. In one example, the central bridging device 200 (more specifically at the VCB 224) may aggregate audio input from each user console 300 and output the aggregated audio input to each (unmuted) user console 300.

At S320, the central bridging device 200 receives a mute output command from the controller 100 via the controller interface 222. According to one or more example embodiments, the mute output command specifies one or more of the user consoles 300, for which the audio output to the user console is to be muted (e.g., the user console receives muted audio output). In one example, the mute output command may identify a user console via a user console identifier, port number or the like.

Each of the system components (e.g., central bridging device 200 and remote bridging device 500), the interface cards (e.g., E&M interface cards 210 and network interface cards 230), and ports (e.g., E&M ports 212 and network ports 232) may have unique identifiers such that each system component, interface card, and port may be identified. For example, a system component "x" may include an interface card "y" which includes a port "z." These identifiers may be used to give commands and otherwise identify the components.

At S325, based on the received mute output command, the central bridging device 200 (e.g., via the voice conference bridge 224) generates first audio output and second audio output for selectively applying unidirectional mute amongst the user consoles 300. In more detail, for example, the voice conference bridge 224 receives the processed audio data from the V-SAPs 226 and aggregates (e.g., adding or some combination of adding, leveling, and/or other processing) the audio signals to generate an aggregate audio signal as the first audio output. In some example embodiments, first audio output may be all of the audio input from the user consoles added together. In other example embodiments, the processing of the audio data may include removal of echoes and/or other audio data artifacts. The audio input signals may be aggregated by overlaying the audio signals on each other, e.g., adding the audio signals.

The central bridging device 200 (e.g., via the ISC 220) generates second audio output with substantially no audio information (e.g., no audio output which a human listener would understand to convey audio information). In one example, the second audio output may be muted audio output (e.g., all 'O's or all '1's), an output specified by the controller 100 or selected by a user of the controller 100 and conveyed in the mute output command or another signal received by the central bridging device 200 from the controller 100.

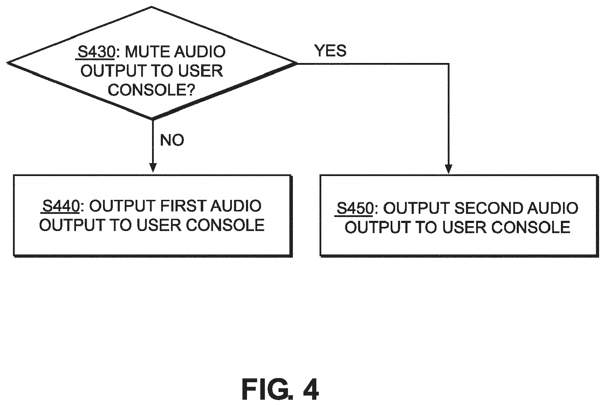

At S330, the central bridging device 200 selectively applies a unidirectional mute based on the mute output command by muting the audio output to the user consoles specified in the mute output command. In one example, muting audio output intended for a user console 300 results in the user console receiving substantially no audio output (e.g., receiving the second audio output, rather than the aggregate first audio output). Example embodiments of methods for selective application of unidirectional mute will be discussed in more detail later with regard to FIG. 4.

According to one or more example embodiments, selective application of unidirectional mute includes maintaining an audio communication with the unmuted user consoles 300 and providing a muted audio output to the muted user consoles 300. Thus, the audio input from the muted user consoles 300 is still received and aggregated with the audio input from the unmuted user consoles 300. The audio output provided to the muted user consoles 300 is a muted audio output. The audio output to the unmuted user consoles 300 is not muted and includes the aggregated audio input signals from the user consoles 300 participating in the audio communication. The audio input signals are received by the central bridging device 200 from the user consoles 300. The input and/or output audio signals may be in a format for communication using an analog telephone receiver.

In a more detailed example with regard to above-discussed S325 in FIG. 3, in generating aggregate audio information, the central bridging device 200 receives and processes audio input from all of the user consoles 300. The central bridging device 200 receives the audio input via each of the E&M ports 212 and network ports 232. Audio input received via an E&M port 212 is preliminarily processed by the SAP 214 and sent to the ISC 220. Audio input received via a network port 232 is preliminarily processed by the SDP 234 and sent to the ISC 220. The preliminary processing of the audio data includes formatting the audio input by recognizing the audio input as audio input, removing or adding packet headers and other identifying information, etc. The ISC 220 receives the audio input from the E&M interface card 210 and the network interface card 230 and uses the V-SAPs 226 to perform further processing such as depacketizing of the audio information and otherwise preparing the audio information for aggregation.

The voice conference bridge 224 receives the processed audio data from the V-SAPs 226 and generates an aggregate audio signal by aggregating (e.g., adding or some combination of adding, leveling, and other processing) all of the audio signals to generate a first audio output. In some example embodiments, the first audio output may be all of the audio input from the user consoles added together. In other example embodiments, the processing of the audio data may include removal of echoes and other audio data artifacts and the first audio output may be an aggregation of the processed audio input from each of the user consoles 300.

The ISC 220 may generate the second audio output. In at least some example embodiments, the ISC 220 need not generate the second audio output if, unless and/or until a mute output command is received. Alternatively, the second audio output may be generated, but not output unless and/or until a mute output command is received.

In more detail with regard to the above-described S330 in FIG. 3, the central bridging device 200 may output the first audio output to unmuted user consoles 300 and the second audio output to the muted user consoles 300 via the E&M port 212 and network ports 232. In one example, unmuted user consoles 300 are user consoles 300 that are not identified in the mute output command as requiring mute, whereas the muted user consoles are user consoles 300 identified in the mute output command as requiring mute. Alternatively, the mute output command may indicate (e.g., via a port number or other identifier) ports to mute (e.g., ports to which the second audio output should be sent).

The V-SAPs 226 packetize the first audio output and the second audio output. The packetized first audio signal may be sent to the E&M interface card 210 and/or the network interface card 230 for output based on the mute output command (e.g., based on which ports of the E&M interface card 210 and/or the network interface card 230 the first audio output and the second audio output are to be output). At the E&M interface card 210, the first audio output is processed by the SAP 214 for communication via the E&M port 212. For example, the SAP 214 may modify a header of the packets of the first audio output for communication with the user console 300 via the E&M port 212. The SAP 214 may also schedule the transmission of the first audio output and perform other actions to facilitate the communication with the user console 300. The first audio output is output to the user console 300 by the SAP 214 via the E&M port 212.

At the network interface card 230, the first audio output is processed by the SDP 234 for communication via the network port 232. For example, the SDP 234 may modify a header of the packets of the first audio output for communication with the user console 300 via the network port 232. The SDP 234 may also schedule the transmission of the first audio output and perform other actions to facilitate the communication with the user console 300 via the network 400 and the remote bridging device 500. The first audio output may be output by the SDP 234 via the network port 232 through the network 400 to the remote bridging device 500. The remote bridging device 500 may process the first audio output for communication to the user.

The second audio output is sent to the E&M interface card 210 and/or the network interface card 230 for output based on the mute output command (e.g., based on which ports of the E&M interface card 210 and/or the network interface card 230 the first audio output and the second audio output are to be output). The second audio output may be processed in the same or substantially the same manner as the first audio output by the V-SAPs 226, SAP 214, and SDP 234. The second audio output is output via the E&M port 212 and the network port 232 in the same or substantially the same manner as the first audio output. Also, the second audio output may be received by the user consoles 300 and the remote bridging devices 500 in the same or substantially the same manner as the first audio output. Accordingly, the connection and communication between muted and unmuted user consoles 300 may be the same or substantially the same, except for the content of the audio output (the first audio output having substantial audio output and the second audio output having substantially no audio output). The remote bridging devices 500 may also process and output the second audio output in the same manner as the first audio output. In this way, the communication between the central bridging device 200 and the user consoles 300 and the remote bridging devices 500 may be maintained even when the user consoles 300 and/or remote bridging devices 500 have muted output.

In an example embodiment, the controller 100 also receives control request signals from the user consoles 300 via the central bridging device 200. For example, a tonal signal may be sent with the audio input from the user console 300 to the central bridging device 200. The ISC 220 may recognize the tonal signal in the audio input and transmit the control request signal to the controller 100. The controller 100 may respond with a control signal indicating to mute output to the user console 300 or unmute the user console 300 based on the control request signal. Other forms of signal may also be received from the user console 300 as a control request signal.

According to one or more example embodiments, the E&M port 212 and the network port 232 are interfaces of the central bridging device 200. The processing circuitry 228 may be configured to cause the central bridging device 200 to selectively apply unidirectional mute of at least audio on at least one of the interfaces, with each of the interfaces corresponding to one of the user consoles 300.

The processing circuitry 228 is configured to cause the central bridging device 200 to transmit signaling (whether the first audio output or the second audio output) between the user consoles 300 independent of whether unidirectional mute is applied to the interfaces.

FIG. 4 is a flow chart illustrating an example embodiment of a method for selectively applying unidirectional mute at S330 in FIG. 3. The operations shown in FIG. 4 may be performed for each of the ports (e.g., E&M ports 212 and network ports 232) of the central bridging device 200 and/or each of the user consoles 300 in response to a received mute output command.

Referring to FIG. 4, at S430, the central bridging device (e.g., at the ISC 220) determines whether to mute audio output to the user console 300 connected via the port based on the mute output command received from the controller 100. In one example, the mute output command may specify a port to mute by a port number or other identification of the port. In another example, the mute output command may specify a user console 300 to be muted by an identifier of the user console 300. The ISC 220 may determine the port though which communication with the identified user console is established.

If the central bridging device 200 determines that the output to the user console 300 need not be muted (e.g., the mute output command does not identify the user console and/or associated port), then at S440 the central bridging device 200 outputs the first audio output to the user console 300 via the port.

If, however, at S430 the central bridging device 200 determines that the output to the user console should be muted (e.g., the mute output command identifies the user console and/or associated port), then at S450 the central bridging device 200 outputs the second audio output to the user console 300 via the port. The second audio output includes substantially no audio information so the user console 300 receives a muted audio output.

FIG. 5 is a block diagram illustrating the controller 100 according to some example embodiments. The controller 100 includes interface 130 (that may be wireless or wireline) to communicate with other devices such as the bridging device 200, and a memory 120. The controller 100 also includes a processor 110 that may control the operations of the controller 100. Some of these operations of the controller 100 include: saving and retrieving information / data to and from the memory 120, transmitting signaling and information to devices using the interface 130, and performing processing based at least in part on computer-readable instructions that are saved in the memory 120. Computer-readable instructions in the memory 120 may provide instructions that cause the processor 110 to perform operations or steps for controller 100 that are commensurate with the operations and steps of the controller 100 described herein.

Methods of selectively applying unidirectional mute, according to one or more example embodiments, may have several advantages. First, the user of the controller 100 (who in many cases is also the user of the user console 300 connected to the central bridging device 200 via the E&M port) can control which user devices receive a muted audio output. This may be useful in many circumstances, such as when a central site wishes to hear what is happening in several remote sites but does not want to transmit the audio input to all of the remote sites. Second, audio communication (input and output) is maintained with each of the user consoles 300 such that it is not necessary to physically unplug a user console output to provide a muted audio output. Third, the unidirectional mute can be used with devices such as analog audio devices including telephone receivers that do not have the capability to mute audio output themselves. Fourth, if the user of the user console 300 connected to the central bridging device 200 via the E&M port is also the user of the controller 100, the other parties can communicate via the established audio communication with the user of the controller 100 to have the user of the controller 100 apply the unidirectional mute to their user console 300 or unmute their user console 300 (using the controller 100) without any communication outside of the audio communication being necessary.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/ acts noted may occur out of the order noted in the figures. For example, two figures shown in succession may in fact be executed substantially concurrently or may sometimes be executed in the reverse order, depending upon the functionality acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes including routines, programs, objects, components, data structures, etc., that perform particular tasks or implement particular abstract data types and may be implemented using existing hardware at, for example, existing network nodes, servers, controllers, bridging devices, routers, or other network elements and/or hardware. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, existing network nodes, servers, controllers, bridging devices, routers, or other network elements, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

Reference is made in detail to embodiments, examples of which are illustrated in the accompanying drawings, wherein like reference numerals refer to the like elements throughout. In this regard, the example embodiments may have different forms and should not be construed as being limited to the descriptions set forth herein. Accordingly, the example embodiments are merely described below, by referring to the figures, to explain example embodiments of the present description. Aspects of various embodiments are specified in the claims.

## Claims

1. A bridging device to facilitate audio communication between a plurality of devices, the bridging device comprising:
processing circuitry configured to cause the bridging device to selectively apply unidirectional mute of at least audio on at least one of a plurality of interfaces, each of the plurality of interfaces corresponding to a device among the plurality of devices.

2. The bridging device of claim 1, wherein the processing circuitry is configured to cause the bridging device to transmit signaling between the plurality of devices independent of whether unidirectional mute is applied to the at least one of the plurality of interfaces.

3. The bridging device of any of claims 1-2, wherein the processing circuitry is further configured to cause the bridging device to
receive a mute output command for a first device among the plurality of devices, the first device having a corresponding first interface among the plurality of interfaces, and
apply unidirectional mute of at least the audio on the first interface based on the mute output command for the first device.

4. The bridging device of claim 3, wherein the processing circuitry is further configured to apply unidirectional mute of at least the audio on the first interface based on the mute output command for the first device by
generating first audio output based on received audio input from at least one of the plurality of devices,
generating second audio output based on the mute output command,
outputting the second audio output via the first interface, and
outputting the first audio output via others of the plurality of interfaces.

5. The bridging device of claim 4, wherein the processing circuitry includes a voice conference bridge configured to generate the first audio output based on the received audio input.

6. The bridging device of any of claims 4-5, wherein the processing circuitry is further configured to cause the bridging device to
packetize the second audio output for output to the first interface,
packetize the first audio output for output to the others of the plurality of interfaces,
output the packetized second audio output via the first interface, and
output the packetized first audio output to the others of the plurality of interfaces.

7. The bridging device of any of claims 4-6, wherein
the mute output command for the first device is a command to output mute audio output to the first interface, and
the second audio output is a muted signal.

8. The bridging device of any of claims 4-7, wherein the second audio output includes substantially no audio information.

9. The bridging device of any of claims 4-8, wherein the first audio output and the second audio output are formatted for an analog telephone.

10. The bridging device of claim 1, wherein the processing circuitry is configured to selectively apply the unidirectional mute by selectively propagating audio input received at the bridging device to another of the plurality of interfaces and not to the at least one of the plurality of interfaces.

11. The bridging device of any of claims 1-10, wherein the processing circuitry is configured to selectively apply the unidirectional mute by selectively propagating audio input received at the bridging device to another of the plurality of interfaces and not to the at least one of the plurality of interfaces.

12. A method for operating a bridging device, the method comprising:
selectively applying, by the bridging device, unidirectional mute of at least audio on at least one of a plurality of interfaces, each of the plurality of interfaces corresponding to a device among a plurality of devices.

13. The method of claim 12, further comprising:
transmitting signaling between the plurality of devices independent of whether unidirectional mute is applied to the at least one of the plurality of interfaces.

14. The method of any of claims 12-13, further comprising:
receiving a mute output command for a first device among the plurality of devices, the first device having a corresponding first interface among the plurality of interfaces; and
applying the unidirectional mute of at least the audio on the first interface based on the mute output command for the first device.

15. A non-transitory computer readable storage medium storing computer-executable instructions that, when executed by one or more processors of a bridging device, cause the bridging device to perform a method comprising:
selectively applying unidirectional mute of at least audio on at least one of a plurality of interfaces, each of the plurality of interfaces corresponding to a device among a plurality of devices.
